# EUROPEAN PATENT APPLICATION

(11) **EP 2 797 390 A1**
(43) Date of publication of application: **29.10.2014**
(21) Application number: 11877806.7
(22) Date of filing: 22.12.2011
(51) Int. Cl.: H05B 37/02, G01R 31/00

(54) **CONTROL METHOD FOR ELECTRICAL INSTRUMENT, ELECTRICAL INSTRUMENT SYSTEM, AND TIMER DEVICE**

(71) Applicant: Elm Inc., Minamisatsuma-shi Kagoshima 897-1124 (JP)
(72) Inventor: MIYAHARA Takakazu, Minami-satsuma-city Kagoshima 897-1124 (JP)
(74) Representative: White, Duncan Rohan
(86) International application number: PCT/JP2011/079807
(87) International publication number: WO 2013/094053

(57) **Abstract**

Provided are a control method, an electrical instrument, and a timer device that control, in an inexpensive and simple manner, an electrical instrument such as an illuminating instrument, to various operation states. A control method for an electrical instrument according to the present invention is a control method for an electrical instrument configured to be able to change an operation state thereof in accordance with a control sequence in which a power supply is momentarily turned off, the method including: connecting the electrical instrument to a commercial power supply, via a timer device capable of being set so as to momentarily turn off an output therefrom or turn on/off the output at a time set as desired, in accordance with the control sequence of the electrical instrument; and changing the operation state of the electrical instrument in accordance with a predetermined control sequence set in the timer device. The timer device is configured to be able to be set so as to momentarily turn off an output therefrom or turn on/off the output at a time set as desired, in accordance with the control sequence of the electrical instrument.

## Description

### TECHNICAL FIELD

The present invention relates to a technology that uses a timer device that controls an electrical instrument capable of selecting an operation state thereof, in accordance with the length of a time period of a power application (on) state /non power application (off) state of a power supply or in accordance with the number of times of turning on/off the power supply.

### BACKGROUND ART

There are some electrical instruments, for example, some illuminating instruments, that can vary their operation in accordance with a control sequence for controlling a power application state therefor by a power supply being turned on and off. Such illuminating instruments are described in Patent Documents 1, 2, and 3 below.

Also, for example, there are illuminating instruments that are often used in passageways and the like in general houses, and in which while the illuminating instruments are in a fully-lit state, if a switch thereof on a wall is turned off once and then turned on immediately, the brightness mode thereof is changed into a night light mode. Such illuminating instruments have been manufactured and commercially available.

Hereinafter, an operation of turning off an illuminating instrument that is in a fully-lit state, for a short time period less than or equal to several seconds will be referred to as turning an illuminating instrument "momentarily off". It is understood that after the illuminating instrument is momentarily turned off, the illuminating instrument is in an on-state until it is turned off again.

In recent years, aquariums in which tropical fish, water plants, and the like are grown have become popular, and various instruments for illuminating an aquarium provided in a room are commercially available. Conventionally, for illumination, fluorescent lamps and metal halide lamps have been mainly used, but recently, LEDs are becoming popular because of their improved efficiency and their easiness to realize different wavelength characteristics depending on targets to be grown in an aquarium.

With respect to such an aquarium in which tropical fish, water plants, and the like are grown and which is becoming popular in recent years, in a case where water plants, coral, and the like are grown therein, for example, at nighttime, if light is too strong, a soft mood cannot be created, and if the light is turned off, the aquarium becomes pitch dark and nothing can be seen.

Moreover, the wavelength characteristics necessary for the target to be grown may be different from those of light that is pleasant for human eyes. For example, when an aquarium in which saltwater fish and coral are kept is illuminated with weak blue light at nighttime, it is very beautiful.

With respect to the illumination of the aquarium, in a case where, for example, water plants and coral are grown therein, they need appropriate wavelengths and rather strong light to grow, but if strong illumination is continuously applied thereto, it would adversely affect their growth and is not appropriate also in terms of energy saving. Thus, generally, after illumination is applied for a necessary time period, the illumination is turned off.

### CITATION LIST

### PATENT DOCUMENTS

Patent Document 1: Japanese Paten Application No. 2010-282757, LIGHTING DEVICE AND LUMINAIRE
Patent Document 2: Japanese Laid-Open Patent Publication No. 2011-9077, LIGHTING SYSTEM
Patent Document 3: Japanese Laid-Open Patent Publication No. 2010-20972, LIGHTING DEVICE, ILLUMINATION FIXTURE, AND ILLUMINATION SYSTEM

### SUMMARY OF THE INVENTION

### PROBLEMS TO BE SOLVED BY THE INVENTION

For the purposes mentioned above, various timer devices that can turn on/off illumination at a time set in advance are also commercially available. However, general timer devices have only one output, and thus, can only be set to perform either turning on or off illumination. Some timers for an aquarium and some high function timers have a plurality of outputs. Such timers can create variation of color and brightness, but they are expensive and require provision of a plurality of lamps.

Moreover, in a case where plants such as foliage plants or flowers are to be grown in a room, for the growth thereof, purple light mainly composed of red light but containing blue light by about 25% is most efficient. However, such light does not allow a person to see the right color of the plants or flowers when viewing them, and thus, is not appropriate.

Thus, not only for an aquarium but also for cases such as growing plants in a room, there are demands for timer devices that can control, in an inexpensive and simple manner, illumination whose brightness and wavelength characteristics are to be varied in accordance with an elapsed time period.

Therefore, the present invention has been made to provide a control method, an electrical instrument system, and a timer device that control, in an inexpensive and simple manner, an electrical instrument such as an illuminating instrument so as to operate in various operation states.

### SOLUTION TO THE PROBLEMS

A control method for an electrical instrument according to claim 1 of the present invention is a control method for an electrical instrument configured to be able to change an operation state thereof in accordance with a control sequence in which a power supply is momentarily turned off, the method including:
connecting the electrical instrument to a commercial power supply, via a timer device capable of being set so as to momentarily turn off an output therefrom or turn on/off the output at a time set as desired, in accordance with the control sequence of the electrical instrument; and
changing the operation state of the electrical instrument in accordance with a predetermined control sequence set in the timer device.

An electrical instrument system according to claim 2 is an electrical instrument system including:
an electrical instrument configured to be able to change an operation state thereof in accordance with a control sequence in which a power supply is momentarily turned off; and
a timer device capable of being set so as to momentarily turn off an output therefrom or turn on/off the output at a time set as desired, in accordance with the control sequence of the electrical instrument, the timer device being connected to the electrical instrument, wherein
the operation state of the electrical instrument is changed in accordance with a predetermined control sequence set in the timer device.

A timer device according to claim 3 is a timer device capable of being set so as to momentarily turn off an output therefrom or turn on/off the output at a time set as desired, in accordance with the control sequence of the electrical instrument.

### ADVANTAGEOUS EFFECTS OF THE INVENTION

A control method for an electrical instrument according to the present invention is a control method for an electrical instrument configured to be able to change an operation state thereof in accordance with a control sequence in which a power supply is momentarily turned off, the method including:
connecting the electrical instrument to a commercial power supply, via a timer device capable of being set so as to momentarily turn off an output therefrom or turn on/off the output at a time set as desired, in accordance with the control sequence of the electrical instrument; and
changing the operation state of the electrical instrument in accordance with a predetermined control sequence set in the timer device. Accordingly, the electrical instrument can be switched among a plurality of operation states.
The timer device can be controlled with a plurality of operation states set, the electrical instrument being the target is provided with a function of changing an operation state thereof in accordance with a power application sequence, and the output of the timer device is momentarily turned off or turned on/off in accordance with the sequence. Accordingly, even a timer device having only one output becomes able to control a plurality of operation states.
This function can be realized by simply making a change to a program of a general known digital timer, without adding any other component thereto, and thus, can be provided at a low cost.

### BRIEF DESCRIPTION OF THE DRAWINGS

[FIG. 1] FIG. 1 is a perspective view showing one example of a timer device according to the present invention.
[FIG. 2] FIG. 2 is a block diagram of the timer device.
[FIG. 3] FIG. 3 is a time chart describing a control pattern to be outputted from a basic timer device.
[FIG. 4] FIG. 4 is a block diagram of another example of an illuminating instrument according to the present invention.
[FIG. 5] FIG. 5 is a time chart describing one example of a control pattern to be outputted from the timer device according to the present invention.
[FIG. 6] FIG. 6 is a time chart describing another example of the control pattern to be outputted from the timer device according to the present invention.
[FIG. 7] FIG. 7 is a block diagram of still another example of the illuminating instrument according to the present invention.
[FIG. 8] FIG. 8 is a perspective view of an example in which the illuminating instrument shown in FIG. 7 is used for illuminating an aquarium.
[FIG. 9] FIG. 9 is a time chart describing another example of the control pattern to be outputted from the timer device according to the present invention.
[FIG. 10] FIG. 10 is a front view showing one example of an electrical instrument system according to the present invention.
[FIG. 11] FIG. 11 is a time chart describing another example of the control pattern to be outputted from the timer device according to the present invention.

### DESCRIPTION OF EMBODIMENTS

Hereinafter, embodiments of the present invention will be described with reference to the drawings.

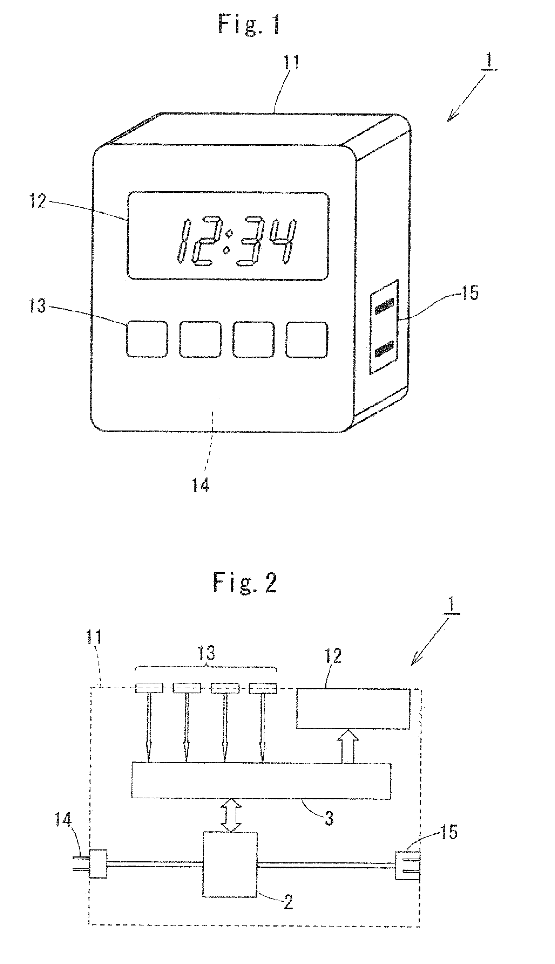

FIG. 1 shows a perspective view of one example of a timer device according to the present invention, and FIG. 2 shows a block diagram of an example of a circuit configuration thereof.

As shown in these figures, a timer device 1 has an external shape similar to that of a digital clock, for example. The timer device 1 includes a display part 12 and an operation button group 13 on the front face of a housing 11, a power supply plug 14 on the rear face of the housing 11, and an output receptacle 15 on a side surface of the housing 11.

The housing 11 includes therein switching means 2 which switches on/off the power supply output from the power supply plug 14 to the output receptacle 15, and a control unit 3 which controls the on/off switching performed by the switching means 2.

The control unit 3 includes, for example, a programmable microcomputer, a memory, and the like. In the control unit 3, a real time clock function for outputting time information, a function for controlling the content of a display on the display part 12, a function for recognizing the content of operation performed on the operation button group 13, a function for storing set contents, and the like are realized by hardware and software. By having the above configuration, the control unit 3 is configured to be able to set, based on operation of the operation button group 13, a timing at which the power supply output to the output receptacle 15 is switched on, a timing at which the power supply output is switched off, and a timing at which the power supply output is momentarily turned off for a predetermined short time period, at desired time points by a desired number of times. Moreover, the control unit 3 may be configured to be able to set, as desired, the length of the predetermined short time period for which the power supply output is momentarily turned off.

It should be noted that the timing at which the power supply output to the output receptacle 15 is switched on, the timing at which the power supply output is switched off, and the timing at which the power supply output is momentarily turned off for a predetermined short time period are set at desired time points by a desired number of times, and the power supply output is controlled so as to be turned on/off at such set timings. Now, the temporal change pattern in which the power supply output is controlled as above will be referred to as a control pattern, and the procedure in which an operation state of an electrical instrument is sequentially controlled in accordance with the control pattern according to the lapse of time will be referred to as a control sequence.

Although conventional programmable timers are provided with a function of turning on/off the output in units of one minute, they are not provided with a function of momentarily turning off the output for a short time period, unlike the timer device 1. Thus, such conventional programmable timers are not provided with a function of momentarily turning off the output and then turning it off again, and thereafter, turning it on, unlike the timer device 1.

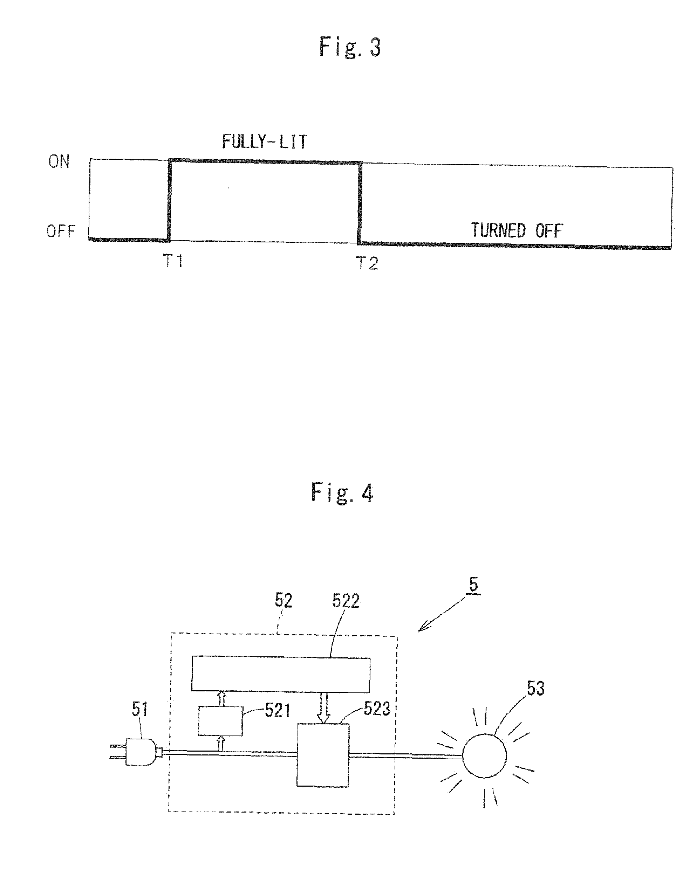

FIG. 3 is a time chart showing an on/off change state of the output when, through operation of the operation button group 13 of the timer device 1, the timer device 1 is set to a basic first control pattern where the output is switched on at a time T1 and the output is switched off at a time T2.

When an ordinary illuminating instrument is connected to the output receptacle 15 of the timer device 1 which has been set to the control pattern shown in FIG. 3, the illuminating instrument is switched, at the time T1, to a fully-lit state being a first operation state, and is switched, at the time T2, to a turned-off state.

### Embodiment 1

FIG. 4 is a block diagram of one example of an electrical instrument to be used in an electrical instrument system according to the present invention.

A first illuminating instrument 5 shown in FIG. 4 includes a plug 51 to be connected to the output receptacle 15 of the timer device 1 shown in FIG. 1, a control circuit 52, and an illuminating lamp 53. The control circuit 52 includes detection means 521, output means 522, and switching means 523. The detection means 521 detects a momentary off state of the power supply. The output means 522 counts an off time period of the detected momentary off state, and outputs a signal for switching, in accordance with the length of the off time period, the illuminating lamp 53 among four states: that is, the output means 522 outputs a signal for switching a first operation state (fully-lit state in this case) to a second operation state (half-lit state in this case), outputs a signal for switching the second operation state to a third operation state, or outputs a signal for switching the operation state to a turned-off state if the off time period is longer than or equal to a predetermined time period. The switching means 523 switches the operation state of the illuminating lamp 53 based on the signal from the output means 522.

The detection means 521 which detects the momentary off state detects a momentary off state that is within a predetermined short time period. The output means 522 detects whether the detected momentary off state is a momentary off state that is within s1 seconds (hereinafter, simply referred to as "momentary off" state) or lasts longer than or equal to an smax. The switching means 523 switches the operation state of the illuminating lamp: from the first operation state to the second operation state upon detection of the momentary off state for the first time; from the second operation state to the third operation state upon detection of the momentary off state for the second time; from the third operation state to a fourth operation state upon detection of the momentary off state for the third time, ···. When the power supply is continuously off for the smax seconds or longer, the operation state is switched to the turned-off state, and the number of times of detection of the momentary off state is reset to 0.

Here, it is defined that s1 < smax, the first operation state is a fully-lit state, the second operation state is a half-lit state, the third operation state is a 1/10-lit state (not used in this embodiment), the fourth operation state is a blinking state (not used in this embodiment), ···

For example, the s1 seconds is defined as a short time period about 0.1 seconds to 1 second, and the smax is defined as about 1.5 seconds to 2 seconds.

It should be noted that the first illuminating instrument 5 and the timer device 1 form the electrical instrument system according to the present invention. By use of this electrical instrument system, a control method for the electrical instrument according to the present invention is performed.

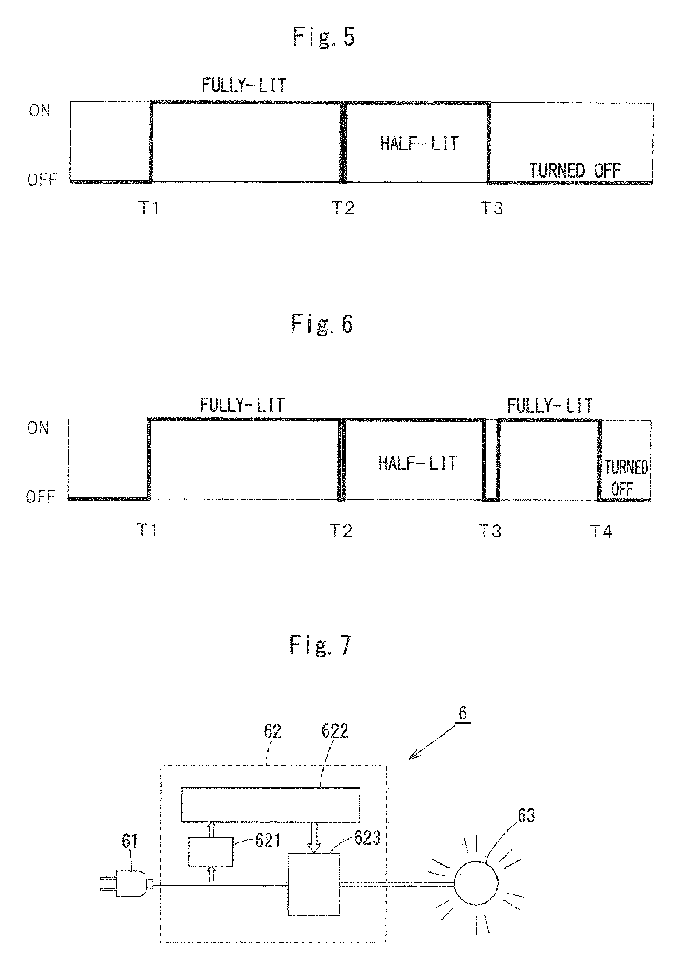

FIG. 5 shows one example of an on/off pattern of the power supply outputted from the output receptacle 15 of the timer device 1. This pattern will be referred to as a second control pattern.

This second control pattern is an example in which the power supply is turned on at the time T1, and the output is momentarily off at the time T2 and then the on-state is maintained, and then, the output is off from T3 (off-state longer than or equal to the smax seconds). In this case, the timer device 1 is programmed so as to output in the second control pattern.

The first illuminating instrument 5 has a function of performing control so as to shift the first operation state to the second operation state (half-lit state) in accordance with the sequence in which the fully-lit state being the first operation state is followed by a momentary off state. Thus, the first illuminating instrument 5 shifts, at T1, the lit state of the illuminating lamp 53 being the target, to the fully-lit state being the first operation state, and then shifts, at T2, the fully-lit state to the second operation state, i.e., the half-lit state in this case. On and after T3, based on an off-state longer than or equal to the smax seconds, the operation state is shifted to the turned-off state.

FIG. 6 shows one example of the on/off pattern of the power supply outputted from the output receptacle 15 of the timer device 1. This pattern will be referred to as a third control pattern.

This third pattern is an example in which the power supply is turned on at T1, and the output is momentarily off at T2 and then the on-state is maintained, then, the output is off from T3 for longer than or equal to the smax seconds, for example, 2 seconds, and then turned on, and then, is off from T4 for longer than or equal to the smax seconds. In this case, the timer device 1 is programmed so as to output in the third control pattern.

In accordance with this sequence, the first illuminating instrument 5 shifts, at T1, the operation state of the illuminating lamp 53 being the target, to the fully-lit state being the first operation state, and then shifts, at T2, from the first operation state to the second operation state, i.e., the half-lit state in this case. After an off-state longer than or equal to 2 seconds from T3, the first illuminating instrument 5 shifts the operation state of the illuminating lamp 53 to the fully-lit state being the first operation state again. On and after T4, the operation state of the illuminating lamp 53 is shifted to the turned-off state. It should be noted that the aforementioned off-state longer than or equal to 2 seconds at T3 causes the illuminating lamp 53 to return to the initial state once, and then, the illuminating lamp 53 is turned on again after 2 seconds. As a result of this, the operation state of the illuminating lamp 53 is shifted to the fully-lit state being the first operation state.

### Embodiment 2

FIG. 7 is a block diagram of a second illuminating instrument 6. The differences between the second illuminating instrument 6 and the first illuminating instrument 5 shown in FIG. 4 are as follows. An illuminating lamp 63 is lit in a plurality of different illuminating colors, and switching means 623 controls the illuminating lamp 63 so as to be lit in pale blue in the fully-lit state being the first operation state, so as to be lit in blue in the second operation state, and so as to be dimly lit in blue in the third operation state.

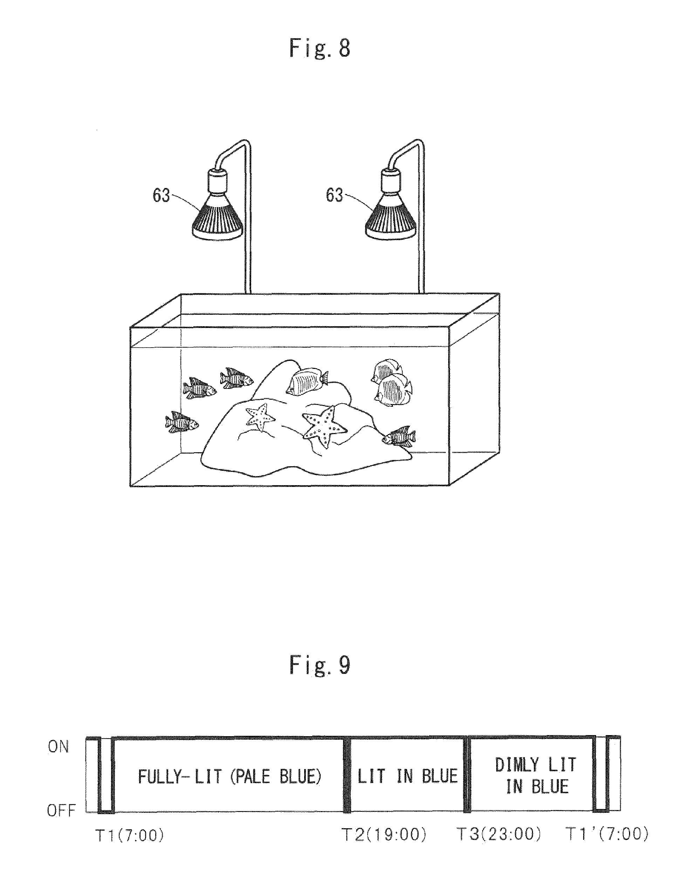

FIG. 8 is a perspective view of an example in which the second illuminating instrument 6 is used for illuminating an aquarium in which coral and the like are grown, and the aquarium is illuminated with two illuminating lamps 63 of the second illuminating instrument 6.

FIG. 9 shows one example of the on/off pattern of the power supply outputted from the output receptacle 15 of the timer device 1. This pattern will be referred to as a fourth control pattern.

In this fourth pattern, the power supply is turned on at T1 (for example, 7 am), and the output is momentarily off at T2 (for example, 7 pm) and then the on-state is maintained, then, the output is momentarily off for the second time at T3 (for example, 11 pm) and then the on-state is maintained, and then, the output is off for longer than or equal to the smax seconds from T1 (for example, 7 am) next day and then turned on.

In this case, the timer device 1 is programmed so as to output in the fourth control pattern.

In accordance with this sequence, the second illuminating instrument 6 shifts the lit state of the illuminating lamp 63 being the target: to the fully-lit (lit in pale blue) state being the first operation state at T1; to the second operation state at T2, i.e., lit in blue in this case; and to the third operation state at T3, i.e., dimly lit in blue in this case. At T4, the second illuminating instrument 6 turns off the illuminating lamp 63 for longer than or equal to the smax seconds, and then turns it on, thereby shifting the lit state of the illuminating lamp 63 to the fully-lit (lit in pale blue) state again.

It should be noted that the second illuminating instrument 6 and the timer device 1 form the electrical instrument system according to the present invention. By use of this electrical instrument system, the control method for the electrical instrument according to the present invention is performed.

In this case, if the timer device 1 is combined with the illuminating instrument 63 which is set so as to emit, in the fully-lit state, strong pale blue light of 10,000 to 20,000 Kelvin for coral which performs photosynthesis, so as to emit weak blue light about 1/10 of the brightness of the fully-lit state based on the momentary off state for the first time, and so as to emit weak blue light about 1/50 of the brightness of the fully-lit state based on the momentary off state for the second time, the illuminating lamp 63 can be made fully-lit at 7 am being the time around sunrise to allow the coral to grow with strong pale blue light, and then, at 7 pm being the time around sunset, the illuminating lamp 63 can be shifted to a little dark blue state being the second operation state, based on the momentary off state for the first time, thereby being able to create an atmosphere of a calm sea.

In this blue light state, when the power supply is momentarily turned off again, the brightness is reduced to, for example, about 1/50 of that at the time of the fully-lit state, whereby the illuminating lamp 63 is shifted to a night light state which presents a deep sea image. Illumination by such blue light induces coral and the like to emit fluorescence, which is very beautiful.

In any case, by the power supply being turned on at 7 am after having been off for longer than or equal to a predetermined time period (the smax seconds), the illuminating lamp 63 returns to the fully-lit state.

### Embodiment 3

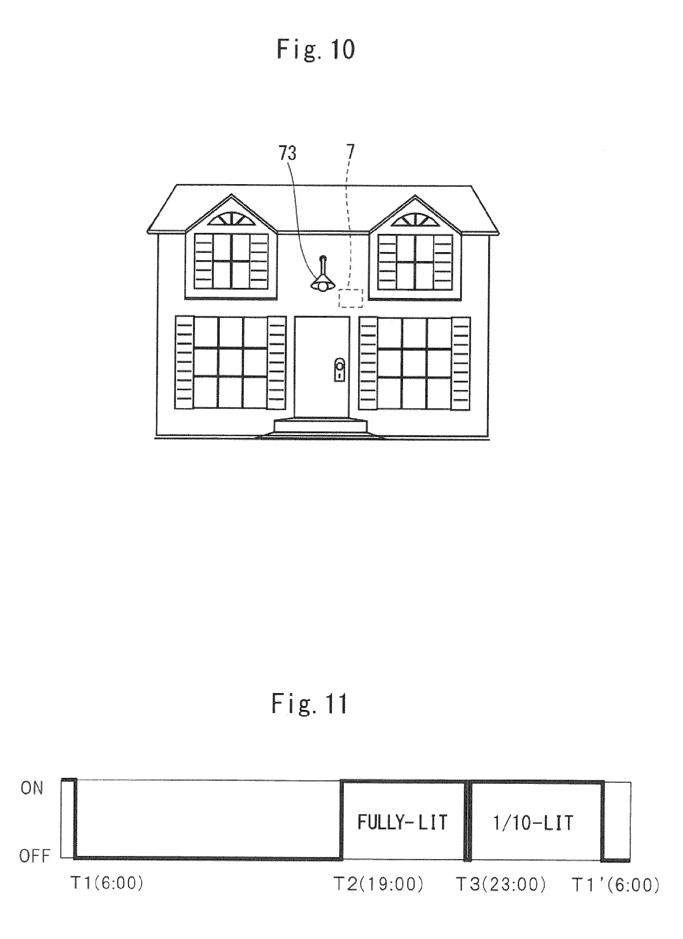

FIG. 10 is a front view of an entrance of a house where a third illuminating instrument 7 is used for an illuminating lamp 73, as an example of the electrical instrument system.

As a result of the combination of the timer device and the illuminating instrument 7, the third illuminating instrument 7 has a function of, upon detection of the momentary off state for the first time, shifting the first operation state of the illuminating lamp 73 to the second operation state to realize a 1/10-lit state.

As in the case of an entrance of a house, a place where visitors come needs to be illuminated at nighttime, but even in a time period where visitors do not come, it is desired to illuminate the place for the sake of security. However, keeping bright illumination all night would be nuisance for neighbors, make the night sky too bright to see stars, or is not preferable also in terms of energy saving.

For such usage, by employing an electrical instrument system obtained by combining the timer device and the third illuminating instrument 7 according to the present invention, the illuminating lamp 73 can be controlled, for example, as in a fifth control pattern shown in FIG. 11, so as to be fully-lit at 7 pm, so as to be in a security lamp mode at 11 pm with the light reduced to 1/10, and so as to be turned off at 6 am.

It should be noted that either one of the timer device or the illuminating instrument according to the present invention may be additionally provided with an illuminance sensor, whereby the timing of fully-lighting the illuminating lamp and the timing of turning it off may be switched in accordance with the ambient brightness, not based on the time.

Further, an illumination system composed of the timer device and the illuminating instrument according to the present invention can be effectively used also in illuminating stairs and corridors in a house. In such a case, for example, the illuminating lamp can be fully-lit at 7 pm, be in a night light mode at 0 am with the light reduced, and be turned off at 7 am.

It should be noted that the third illuminating instrument 7 and the timer device form the electrical instrument system according to the present invention. By use of this electrical instrument system, the control method for the electrical instrument according to the present invention is performed.

Also in this embodiment of the present invention, either one of the timer device or the illuminating instrument is additionally provided with an illuminance sensor, whereby the timing of fully-lighting the illuminating lamp and the timing of turning it off may be switched in accordance with the ambient brightness, not based on the time. Further, by also providing a manual switch, the on/off switching may be performed by a person, and only the shift to the half-lit state or to the 1/10-lit state may be switched by the timer device.

As described above, with the timer device according to the present invention, if the electrical instrument to be controlled is an illuminating instrument, the illuminance thereof can be reduced, at a set time, to a half or 1/10, or the operation state thereof can be shifted, at a set time, to a state where blue light presenting a deep sea image is emitted.

By making these sequences selectable for each electrical instrument being the target, for example, if a timer device that allows selection of a brightness from among a plurality of brightnesses for each time period by repeating momentarily turning off the electrical instrument a plurality of times, and an illuminating instrument that can select an illuminating color in accordance with the number of times of the repeat of the momentary turning off are connected to each other, it becomes possible to easily structure an illumination system in which the color of illumination can be changed in accordance with a time period.

Further, by providing the timer device according to the present invention with a function of being able to set a momentary off time period and to set as desired the number of times of the repeat thereof, and the like, it is possible to provide a timer device that can control in general a commercially available electrical instrument having similar functions.

The electrical instrument according to the present invention is not limited to an illuminating instrument. For example, a rotating device or an electric heater can also be a target to be controlled. In such a case, the operation state of a rotating device or an electric heating device can be switched by the timer device, among different operation states, such as a 100% operation state, a 70% operation state, and an intermittent operation state.

### DESCRIPTION OF THE REFERENCE CHARACTERS

- 1: timer device
- 11: housing
- 12: display part
- 13: operation button group
- 14: power supply plug
- 15: output receptacle
- 2: switching means
- 3: control unit
- 5: first illuminating instrument
- 51: plug
- 52: control circuit
- 53: illuminating lamp
- 521: detection means
- 522: output means
- 523: switching means

## Claims

1. A control method for an electrical instrument configured to be able to change an operation state thereof in accordance with a control sequence in which a power supply is momentarily turned off, the method comprising:
connecting the electrical instrument to a commercial power supply, via a timer device capable of being set so as to momentarily turn off an output therefrom or turn on/off the output at a time set as desired, in accordance with the control sequence of the electrical instrument; and
changing the operation state of the electrical instrument in accordance with a predetermined control sequence set in the timer device.

2. An electrical instrument system comprising:
an electrical instrument configured to be able to change an operation state thereof in accordance with a control sequence in which a power supply is momentarily turned off; and
a timer device capable of being set so as to momentarily turn off an output therefrom or turn on/off the output at a time set as desired, in accordance with the control sequence of the electrical instrument, the timer device being connected to the electrical instrument, wherein
the operation state of the electrical instrument is changed in accordance with a predetermined control sequence set in the timer device.

3. A timer device used in either one of the control method according to claim 1 or the electrical instrument system according to claim 2, the timer device capable of being set so as to momentarily turn off an output therefrom or turn on/off the output at a time set as desired, in accordance with the control sequence of the electrical instrument.
